# FASCICULE DE BREVET EUROPEEN

(11) **EP 3 387 784 B1**
(45) Date de publication et mention de la délivrance du brevet: **25.09.2019**
(21) Numéro de dépôt: 16825821.8
(22) Date de dépôt: 09.12.2016
(51) Int. Cl.: H04L 9/32, H04L 29/06

(54) **PROCEDE DE PERSONNALISATION D'UN DOCUMENT DE SECURITE**
VERFAHREN ZUR PERSONALISIERUNG EINES SICHEREN DOKUMENTS
METHOD FOR CUSTOMISING A SECURE DOCUMENT

(30) Priorité: 10.12.2015 FR 1562108
(43) Date de publication de la demande: 17.10.2018
(73) Titulaire: Oberthur Technologies, 92700 Colombes (FR)
(72) Inventeur: BARREAU, Cédric, 92700 Colombes (FR); FERAUD, Alban, 92700 Colombes (FR)
(74) Mandataire: Cabinet Beau de Loménie
(86) Numéro de dépôt international: PCT/FR2016/053318
(87) Numéro de publication internationale: WO 2017/098189

(56) Documents cités:
- EP-A1- 1 544 706
- US-A1- 2008 005 567

## Description

### Arrière-plan technologique

L'invention se rapporte au domaine des documents de sécurité, tels que les cartes bancaires ou d'identité, et passeports électroniques, et porte plus particulièrement sur la personnalisation de tels documents.

Les documents de sécurité sont des documents comportant des caractéristiques physiques permettant une authentification fiable du porteur du document, et du document lui-même. Autrement dit, ces caractéristiques physiques permettent, à partir d'un protocole d'authentification prédéterminé, de s'assurer qu'un individu est bien le propriétaire légitime du document de sécurité en question, et que le document lui-même est un document authentique. Ces caractéristiques physiques (impressions, matériaux spéciaux, données numérique enregistrées...) sont généralement difficiles à contrefaire afin de protéger le document électronique contre tout acte de malveillance.

Les documents de sécurité se présentent sous diverses formes plus ou moins complexes. On notera en particulier les documents de sécurité dits « électroniques » dans le sens où ils comportent un module électronique équipé d'au moins une mémoire, au contraire des documents de sécurité classiques qui sont dépourvus d'une telle mémoire. Les cartes d'identité, cartes bancaires (généralement des cartes à puce) ou encore les passeports électroniques constituent des exemples courants de documents de sécurité.

Lors de leur fabrication, ces documents de sécurité sont généralement personnalisés. Cette étape de personnalisation consiste à apposer, sur et/ou dans le document de sécurité, des données personnelles propres au futur propriétaire du document. Ces données personnelles sont par exemple imprimées ou embossées à la surface du document. Dans le cas des documents de sécurité électroniques, de telles données personnelles peuvent également être enregistrées dans la mémoire du module électronique. Typiquement, lors d'une personnalisation d'une carte bancaire, le fabricant appose des données personnelles du porteur sur les faces de la carte (nom, prénom, N° de carte etc.) et enregistre des données personnelles dans la puce de la carte.

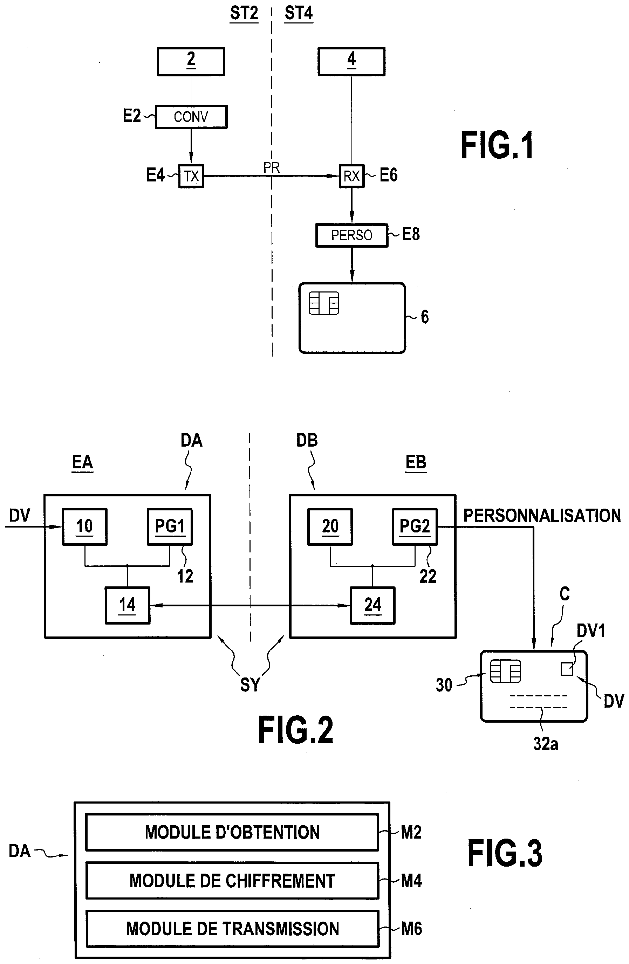

La **figure 1** représente schématiquement un procédé de personnalisation utilisé conventionnellement pour personnaliser un document de sécurité. Dans cet exemple, une première entité 2 (présente sur un premier site ST2) et une deuxième entité 4 (présente sur un deuxième site ST4) coopèrent ensemble afin de réaliser la personnalisation d'un document de sécurité 6.

Pour ce faire, l'entité 2 collecte des données personnelles propres au porteur d'un document de sécurité 6 à personnaliser puis convertit (E2) ces données personnelles en données de personnalisation PR définissant des personnalisations physiques (impressions, embossage, enregistrement de données...) à apporter au document de sécurité 6. L'entité 2 envoie (E4) ultérieurement ces données de personnalisation PR à l'entité 4 qui poursuit alors le processus sur le site ST4. Pour ce faire, l'entité 4 reçoit (E6) les données de personnalisation PR puis personnalise (E8) le document de sécurité 6 à partir des données de personnalisation PR.

Ce procédé connu présente cependant un risque en ce qu'un document de sécurité peut éventuellement être personnalisé avec des données personnelles qui ne lui étaient pas destinées. Une entité 4 peut en effet personnaliser par erreur (ou volontairement) le document de sécurité 6 avec les données de personnalisation associées à une personne autre que le propriétaire légitime du document de sécurité. Le processus de personnalisation est donc aujourd'hui confronté à des risques importants de fiabilité et de sécurité.

Des problèmes de sécurité existent par ailleurs dans le cas où plusieurs entités 4 différentes se partagent la charge de personnaliser un ensemble de documents de sécurité. Un risque existe dans la mesure où plusieurs entités 4 (présentes sur différents sites) ont accès aux données de personnalisation PR envoyées par l'entité 2. Lorsque les données de personnalisation PR présentent un caractère confidentiel, la dispersion de ces données parmi divers acteurs capables de traiter et utiliser ces données est problématique.

Par ailleurs, l'entité 4 en charge de la personnalisation jouit en général d'une relative flexibilité quant au choix des documents de sécurité vierges qu'il utilise lorsqu'il réalise la personnalisation E8. Dans certains cas, l'entité 4 a la possibilité de choisir parmi plusieurs sources d'approvisionnement en document de sécurité 6. L'entité 2 ou un tiers n'ont pas aujourd'hui les moyens de s'assurer que l'entité 4 réalise bien la personnalisation E8 sur un document de sécurité 6 d'une origine spécifique. Il en résulte un aléa économique, notamment pour certains fabricants qui souhaitent sécuriser leur activité de fabrication de documents de sécurité.

Le document de publication de demande de brevet US 2008/0005567 A1 par Johnson expose la personnalisation d'une carte à puce, voire d'une application, sur la base d'un ensemble d'instructions de personnalisation chiffrées.

Le document de publication de demande de brevet EP 1 544 706 A1 par Amador expose un procédé de chiffrement d'un fichier de données aptes à la personnalisation d'une carte à puce au moyen d'une clé racine.

Il existe donc aujourd'hui un besoin pour d'avantage de sécurité et de fiabilité dans le processus de personnalisation d'un document de sécurité.

### Objet et résumé

Un des buts de l'invention est de remédier aux insuffisances de l'état de la technique exposées ci-avant.

A cet effet, la présente invention concerne un procédé de traitement selon la revendication indépendante 1.

L'invention permet avantageusement de sécuriser le processus de personnalisation d'un document de sécurité. Pour ce faire, un lien intrinsèque est créé entre les données de personnalisation et le document de sécurité. Ceci est possible car la donnée de diversification (permettant de chiffrer et déchiffrer les données de personnalisation) est présente dans ou sur le document de sécurité, sous une quelconque forme appropriée (donnée numérique enregistrée dans une mémoire, motif physique présent sur le document etc.). Ainsi, seule l'analyse du document de sécurité permet de récupérer la donnée de diversification lors de la personnalisation. Autrement dit, le fabricant supervisant la personnalisation ne peut obtenir la donnée de diversification DV qu'à partir du document de sécurité lui-même. Typiquement, la donnée de diversification (et donc les données de personnalisation correspondantes) ne peuvent être récupérées que lorsque la personnalisation du document de sécurité débute, diminuant ainsi grandement les risques de sécurité mentionnés ci-avant.

Par ailleurs, même lorsqu'il est en possession de la donnée de diversification, l'entité en charge de la personnalisation est limitée dans l'usage qu'il peut en faire pour récupérer des données de personnalisation. Ainsi, grâce à l'invention, une entité en charge de personnaliser un premier document de sécurité ne pourra utiliser la donnée de diversification présente sur ledit premier document que pour personnaliser celui-ci, et éventuellement les documents de sécurité appartenant au même lot que ledit premier document de sécurité (selon que cette donnée de diversification est attribuée de façon unique ou collective à un ou plusieurs documents de sécurité).

En conséquence, l'invention vise aussi un programme d'ordinateur sur un support d'informations (ou support d'enregistrement), ce programme étant susceptible d'être mis en oeuvre dans un dispositif électronique, dans un terminal de lecture, ou plus généralement dans un ordinateur, ce programme comportant des instructions adaptées à la mise en oeuvre des étapes d'au moins l'un des procédés définis ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne en outre un système de personnalisation d'un document de sécurité selon la revendication indépendante 14.

Le document de sécurité défini dans les modes de réalisation des procédés et dispositifs ci-avant peut être une carte à puce, par exemple conforme à la norme ISO/IEC 7816.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 déjà décrite représente, de manière schématique, un procédé conventionnel de personnalisation d'un document de sécurité ;
- la figure 2 représente schématiquement la structure d'u système comprenant un dispositif de traitement et un dispositif de personnalisation, selon un mode de réalisation particulier de l'invention ;
- la figure 3 représente schématiquement des modules mis en oeuvre dans le dispositif de traitement de la figure 2, conformément à un mode de réalisation particulier de l'invention ;
- la figure 4 représente schématiquement des modules mis en oeuvre dans le dispositif de personnalisation de la figure 2, conformément à un mode de réalisation particulier de l'invention ;
- la figure 5 représente, sous forme d'un organigramme, les principales étapes d'un procédé de traitement et d'un procédé de personnalisation mis en oeuvre respectivement par un dispositif de traitement et un dispositif de personnalisation, conformément à un mode de réalisation particulier de l'invention ;
- la figure 6 représente schématiquement la structure d'un module électronique d'un document de sécurité, conformément à un mode de réalisation particulier de l'invention ;
- les figures 7 et 8 représentent schématiquement une variante de réalisation de l'invention ; et
- la figure 9 représente schématiquement une variante de réalisation de l'invention.

### Description détaillée de plusieurs modes de réalisation

Comme indiqué précédemment, l'invention porte sur la personnalisation de documents de sécurité, tels que cartes bancaires, ou d'identité, et passeports électroniques par exemple.

Dans les exemples de réalisation qui suivent, le document de sécurité est une carte à puce (par exemple conforme à la norme ISO/IEC 7816) apte, par exemple, à être utilisée comme carte bancaire pour réaliser des opérations bancaires. On comprendra toutefois que des cartes à puces autre que cartes bancaires et des documents de sécurité autres qu'une carte à puce peuvent être envisagés dans le cadre de l'invention.

L'invention propose de sécuriser la personnalisation d'un document de sécurité. Pour ce faire, l'invention, selon ses différents modes de réalisation, requière que les données de personnalisation soient transmises sous forme chiffrée à l'entité en charge de la personnalisation, le chiffrement des données de personnalisation étant réalisé à partir d'une donnée dite de diversification associée au document de sécurité. Cette donnée de personnalisation est par exemple présente dans et/ou sur le document de sécurité à personnaliser. Cette donnée de diversification peut être constitutive du document de sécurité lui-même. L'entité en charge de la personnalisation ne peut alors déchiffrer les données de personnalisation que si elle a accès au document de sécurité lui-même dans ou sur lequel se trouve la donnée de diversification. La récupération de la donnée de diversification depuis le document de sécurité permet de déchiffrer les données de personnalisation et donc, de personnaliser le document de sécurité concerné.

Sauf indications contraires, les éléments communs (ou analogues) à plusieurs figures portent les mêmes signes de référence et présentent des caractéristiques identiques (ou analogues), de sorte que ces éléments communs ne sont généralement pas à nouveau décrits par souci de simplicité.

La **figure 2** représente schématiquement la structure d'un dispositif de traitement DA mis en oeuvre sous la supervision d'une entité EA, ainsi que la structure d'un dispositif de personnalisation DB mis en oeuvre sous la supervision d'une entité EB, conformément à un mode de réalisation particulier. Les dispositifs EA et EB sont ici aptes à coopérer ensemble pour former un système SY.

Dans l'exemple envisagé ici, le dispositif de traitement DA est apte à préparer la personnalisation d'un document de sécurité C, à savoir une carte à puce dans cet exemple. Le dispositif de personnalisation DB (distinct du document de sécurité C) est apte à personnaliser la carte à puce C à partir de données de personnalisation transmises par le dispositif de traitement DA.

Plus spécifiquement, le dispositif de traitement DA comprend ici un processeur 10, une mémoire non volatile 12 et une interface de communication 14. Le dispositif DA présente par exemple l'architecture d'un ordinateur.

La mémoire 12 est une mémoire non volatile réinscriptible ou une mémoire morte (ROM), cette mémoire constituant un support d'enregistrement (ou support d'informations) conforme à un mode de réalisation particulier, lisible par le dispositif de traitement DA, et sur lequel est enregistré un programme d'ordinateur PG1 conforme à un mode de réalisation particulier. Ce programme d'ordinateur PG1 comporte des instructions pour l'exécution des étapes d'un procédé de traitement selon un mode de réalisation particulier.

L'interface de communication 14 est apte à communiquer avec une interface de communication 24 du dispositif de personnalisation DB, comme expliqué ci-après.

Comme représenté en **figure 3**, le processeur 10, piloté par le programme d'ordinateur PG1, et coopérant le cas échéant avec divers éléments matériels du dispositif de traitement DA (mémoires etc.), met ici en oeuvre un certain nombre de modules, à savoir : un module d'obtention M2, un module de chiffrement M4 et un module de transmission M6.

Le module d'obtention M2 est apte à obtenir des données de personnalisation DP pour personnaliser le document de sécurité C. Dans l'exemple envisagé ici, le module d'obtention M2 est configuré pour obtenir des données personnelles propres au futur propriétaire du document de sécurité C, et à convertir ces données personnelles en données de personnalisation DP.

Le module de chiffrement M4 est apte à chiffrer les données de personnalisation DP de sorte à produire des données chiffrées DC, ce chiffrement étant réalisé à partir d'une donnée de diversification DV associée au document de sécurité C que l'on souhaite personnaliser. On suppose ici que le module de chiffrement M4 est apte à récupérer la donnée de diversification DV d'une façon appropriée. On notera que, dans un exemple particulier, cette donnée de diversification DV est présente dans et/ou sur le document de sécurité C. Dans un exemple particulier, la donnée de diversification DV peut être constitutive du document de sécurité C lui-même (comme expliqué ci-après). Il n'est toutefois pas nécessaire que le module de chiffrement M4 (et plus généralement le dispositif DA) ait accès au document de sécurité C lui-même pour obtenir la donnée de diversification DV, cette dernière pouvant être transmise par un tiers ou accessible depuis une base de données par exemple.

Comme indiqué par la suite, dans un exemple particulier, le module de chiffrement M4 est configuré pour réaliser le chiffrement dans un conteneur sécurisé tel un HSM (Hardware Security Module HSM - Module Matériel de Sécurité).

Le module de transmission M6 est apte à transmettre les données chiffrées DC au dispositif de personnalisation DB pour permettre à ce dernier de personnaliser le document de sécurité C à partir des données chiffrées DC et de la donnée de diversification DV associée au document de sécurité C.

Comme représenté en **figure 2**, le dispositif de personnalisation DB comprend un processeur 20, une mémoire non volatile 22 et l'interface de communication 24 déjà mentionnée ci-avant. Ce dispositif DB est apte à causer la personnalisation du document de sécurité C à partir des données chiffrées DC transmises par le dispositif de traitement DA.

La mémoire 22 est une mémoire non volatile réinscriptible ou une mémoire morte (ROM), cette mémoire constituant un support d'enregistrement (ou support d'informations) conforme à un mode de réalisation particulier, lisible par le dispositif de personnalisation DB, et sur lequel est enregistré un programme d'ordinateur PG2 conforme à un mode de réalisation particulier. Ce programme d'ordinateur PG2 comporte des instructions pour l'exécution des étapes d'un procédé personnalisation selon un mode de réalisation particulier.

L'interface de communication 24 est apte à communiquer avec l'interface de communication 14 du dispositif de personnalisation DA, comme déjà indiqué ci-avant.

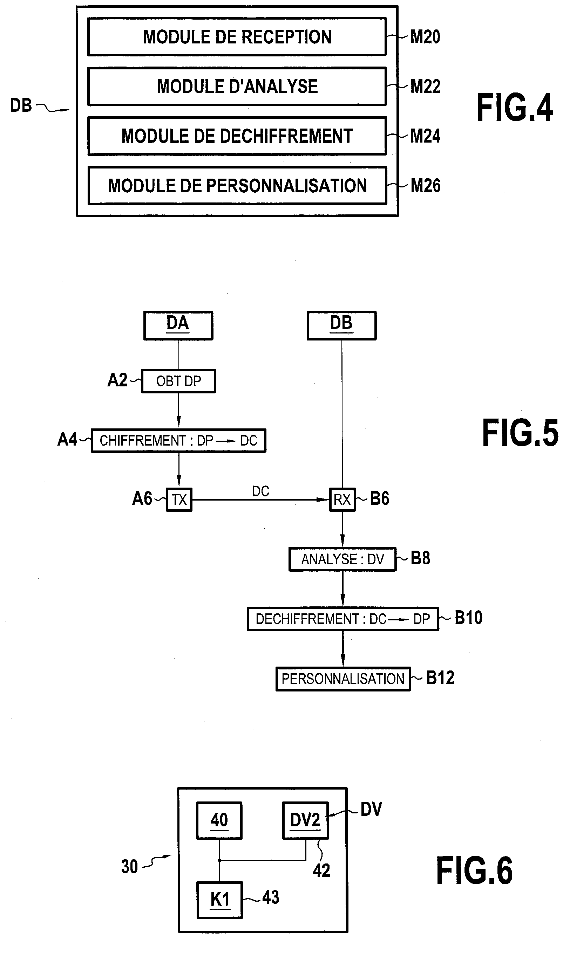

Comme représenté en **figure 4**, le processeur 20, piloté par le programme d'ordinateur PG2, et coopérant le cas échéant avec divers éléments matériels du dispositif de personnalisation DB (mémoires etc.), met ici en oeuvre un certain nombre de modules, à savoir : un module de réception M20, un module d'analyse M22, un module de déchiffrement M24 et un module de personnalisation M26.

Le module de réception M20 est apte à recevoir les données chiffrées DC envoyées par le dispositif de traitement DA. La transmission des données chiffrées DC du dispositif DA au dispositif DB peut se faire via une liaison de communication appropriée, au travers par exemple d'un réseau de communication (Internet etc.) ou à l'aide d'un support adapté (clé USB etc.).

Le module d'analyse M22 est apte à analyser le document de sécurité C de sorte à récupérer la donnée de diversification DV associée au document de sécurité C. La donnée de diversification DV peut prendre divers formes selon le cas d'usage.

Dans un exemple particulier, la donnée de diversification DV est présente dans et/ou sur ledit document C. Cette donnée de diversification DV peut par exemple comprendre au moins un motif DV1 formé à la surface du document de sécurité C. Ce motif peut comprendre par exemple au moins un caractère, symbole et/ou code graphique (code barre, code 2D etc.). La donnée de diversification DV peut également comprendre au moins une donnée DV2 enregistrée dans une mémoire incluse - le cas échéant - dans le document de sécurité C, comme expliqué plus en détail ci-après en référence à la **figure 6****.**

Dans un exemple particulier, la donnée de diversification DV est constitutive du document de sécurité C lui-même. Autrement dit, la donnée de diversification DV peut comprendre au moins une caractéristique physique constitutive du document de sécurité C. La donnée de diversification DV est par exemple formée par au moins une caractéristique physique non clonale de type PUF (pour « Physical Unclonable Function ») du document de sécurité C. La donnée de diversification DV peut par exemple comprendre au moins un motif formée par la structure de tout ou partie du document du document de sécurité C. La donnée de diversification DV peut par exemple être formée en tout ou partie par un ensemble de fibres constitutives du document de sécurité C, ces fibres présentant un agencement ou tout autre caractéristique caractérisant le document de sécurité C.

Aussi, la nature et la mise en oeuvre de l'analyse du document C par le module d'analyse M22 peut varier selon le cas d'espèce. Le module d'analyse M22 peut par exemple utiliser une unité de lecture optique (non représentée) apte à réaliser une détection optique de la donnée de diversification DV1 figurant à la surface du document de sécurité C. Le module d'analyse M22 peut également comprendre une unité de lecture d'une mémoire incluse - le cas échéant - dans le document de sécurité C, comme indiqué ci-avant.

Dans un exemple particulier, la donnée de diversification DV n'est pas associée au document de sécurité C mais à un individu, par exemple le porteur légitime (le titulaire) du document de sécurité C. Dans un exemple particulier, la donnée de diversification DV comprend au moins une caractéristique physique du porteur du document de sécurité C, comme par exemple une empreinte digitale du porteur, une empreinte de l'iris du porteur...

Le module de déchiffrement M24 est apte à déchiffrer les données chiffrées DC reçues du dispositif de traitement DA de sorte à obtenir les données de personnalisation DP. Ce déchiffrement est réalisé à partir de la donnée de diversification DV récupérée par le module d'analyse M22. Comme expliqué plus en détail par la suite, selon certains modes de réalisation, le module de déchiffrement M24 ne réalise pas lui-même le déchiffrement des données chiffrées mais coopère avec une entité (un conteneur sécurisé par exemple) externe au dispositif de personnalisation DB pour causer le déchiffrement des données chiffrées.

Le module de personnalisation M26 est apte à causer la personnalisation du document de sécurité C à partir des données de personnalisation DP récupérées par le module de déchiffrement M24. Pour ce faire, le module de personnalisation M26 interagit avec toutes unités de personnalisation (système d'impression, de gravure, de carbonisation laser ou d'embossage, système d'écriture d'une mémoire etc.) nécessaires à la personnalisation souhaitée, ces unités de personnalisation (non représentées) pouvant être, ou non, incluses totalement ou partiellement dans le dispositif de personnalisation DB. Le module de personnalisation M26 peut par exemple être configuré pour envoyer une commande d'impression à un système d'impression externe afin de réaliser une personnalisation du document de sécurité C par impression.

Comme déjà indiqué, le document de sécurité C peut se présenter selon diverses formes. Il peut s'agir d'un document de sécurité électronique ou non, se présentant par exemple sous la forme d'un livret ou d'une carte.

Comme représenté en **figure 2**, on suppose ici que le document C est une carte à puce, par exemple de type carte bancaire, comprenant un module électronique 30 illustré plus en détail en **figure 6**. La carte à puce C peut, par exemple, être conforme à la norme ISO/IEC 7816.

Plus spécifiquement, le module électronique 30 comprend dans cet exemple le processeur 40, une mémoire non volatile 42 dans laquelle peut être enregistrée une donnée de diversification DV2, et une mémoire non volatile 43 dans laquelle peut être enregistrée une clé maîtresse K1 dont la nature et l'usage seront expliqués par la suite.

Le module électronique 30 peut par exemple être un module d'identité de souscripteur embarqué, autrement désigné sous l'appellation eUICC pour « *embedded Universal Integrated Circuit Chip* ».

Dans un mode de réalisation, le module électronique 30 peut contenir, dans la mémoire non volatile 42 et/ou 43, la résultante de la diversification de la clef maîtresse K1 par la donnée de diversification DV1 et/ou DV2.

Les mémoires non volatiles 40 et 42 peuvent être une seule et même mémoire physique.

Comme déjà indiqué, le motif DV1 formé à la surface de la carte C constitue un premier exemple de donnée de diversification DV. La donnée DV2 enregistrée dans la mémoire 42 constitue un deuxième exemple de donnée de diversification DV. Selon un mode particulier, la donnée de diversification DV comprend DV1 et DV2.

Par ailleurs, la **figure 2** représente ici une personnalisation 32a de la carte à puce C réalisée par impression ou embossage par exemple. D'autres types de personnalisation de la carte à puce C sont envisageables, telle qu'une personnalisation électrique du module électronique 30 dans le cas présent. La personnalisation réalisée par l'entité DB peut également comprendre une configuration particulière du module électronique 30 ou l'enregistrement de données de personnalisation dans le module électronique 30.

Un mode de réalisation particulier est à présent décrit en référence à la **figure 5**. Plus précisément, le dispositif de traitement DA met en oeuvre un procédé de traitement pour préparer la personnalisation du document de sécurité C, en exécutant le programme d'ordinateur PG1. De même, le dispositif de personnalisation DB met en oeuvre un procédé de personnalisation en exécutant le programme d'ordinateur PG2.

Au cours d'une étape A2, le module d'obtention M2 du dispositif de traitement DA obtient les données de personnalisation DP déjà mentionnées ci-avant, ces données définissant une personnalisation du document de sécurité C à réaliser. Pour ce faire, le module d'obtention M2 obtient par exemple des données personnelles associées au futur porteur du document de sécurité C, puis convertit ces données personnelles en données de personnalisation DP exploitables par le dispositif de personnalisation DB.

Au cours d'une étape A4, le module de chiffrement M4 chiffre (ou encrypte) les données de personnalisation DP, à partir de la donnée de diversification DV, de sorte à produire les données chiffrées DC. Les données de personnalisation DP sont ainsi associées (ou liées) au document de sécurité C à personnaliser.

Pour récupérer la donnée de diversification DV, le dispositif de traitement DA ne doit pas nécessairement avoir accès au document de sécurité C lui-même. Typiquement, l'entité EA supervisant l'exécution du dispositif de traitement DA n'a pas en sa possession le document de sécurité C lors de la réalisation du procédé de traitement pour préparer la personnalisation du document de sécurité C.

La donnée de diversification DV peut par exemple être transmise par un tiers au dispositif de traitement DA, ou être accessible par exemple depuis une base de données externe au dispositif de traitement DA, le support utilisé pouvant par exemple être un conteneur sécurisé tel un HSM (Hardware Security Module -Module Matériel de Sécurité).

Dans cet exemple, on suppose que la donnée DV2 enregistrée dans le module électronique 30 de la carte C constitue la donnée de diversification DV. Alternativement, le motif DV1 pourrait être utilisé en tant que donnée de diversification DV (ou DV1 et DV2 en combinaison).

Dans un mode de réalisation particulier, lors du chiffrement A4, les données de personnalisation DP sont chiffrées à partir d'une clé maîtresse de chiffrement K1 en combinaison avec la donnée de diversification DV. La clé maîtresse K1 (ou « master key » en anglais) est par exemple enregistrée dans une mémoire non volatile du dispositif de traitement DA.

Le module de transmission M6 envoie (A6) ensuite les données chiffrées DC au dispositif de personnalisation DB afin que ce dernier puisse personnaliser le document de sécurité C à partir de ces données chiffrées DC et de la donnée de diversification DV associé au document de sécurité.

Le module de réception M20 du dispositif de personnalisation DP reçoit la donnée chiffrée DC au cours d'une étape B6.

Le module d'analyse M22 analyse (B8) par ailleurs le document de sécurité C de sorte à récupérer la donnée de diversification DV présente dans ou sur le document de sécurité C, à savoir : la donnée DV2 enregistrée dans la mémoire 42 dans cet exemple. Pour ce faire, le module d'analyse M22 effectue une lecture de la mémoire 42 du module 30 afin de récupérer la donnée DV2. On notera que la récupération, par le dispositif de personnalisation DB, de la donnée de diversification DV n'est ici possible que dans la mesure où le module électronique 30 est accessible en lecture par le module d'analyse M22.

De manière plus générale, il est généralement nécessaire que l'entité EB soit en possession du document de sécurité C lui-même pour que l'analyse B8 puisse être réalisée.

L'étape d'analyse B8 peut le cas échéant être réalisée avant l'étape de réception B6.

Au cours d'une étape B10, le module de déchiffrement M24 déchiffre (ou décrypte) les données chiffrées DC pour obtenir les données de personnalisation DP. Ce déchiffrement B10 est réalisé à partir de la donnée de diversification DV (i.e. la donnée DV2) récupérée à l'étape B8.

Comme décrit précédemment, dans un mode de réalisation particulier, les données de personnalisation DP sont chiffrées, lors du chiffrement A4, à partir d'une clé maîtresse de chiffrement K1 en combinaison avec la donnée de diversification DV. Toujours dans ce mode de réalisation, lors du déchiffrement B10, les données chiffrées DC peuvent être déchiffrées à partir d'une clé maîtresse de déchiffrement K1a en combinaison avec la donnée de diversification DV. Cette clé maîtresse de déchiffrement K1a est par exemple enregistrée dans la mémoire non volatile 43 du module électronique 30.

Selon un premier mode de réalisation, les clés maîtresses K1 et K1a utilisées respectivement pour le chiffrement A4 et le déchiffrement B10 sont identiques (cas d'un chiffrement symétrique). Selon un deuxième mode de réalisation, les clés maîtresses K1 et K1a sont des clés maîtresses appariées différentes l'une de l'autre (cas d'un chiffrement asymétrique). Dans ce dernier cas, la clé maîtresse de chiffrement K1 permet uniquement de réaliser le chiffrement, tandis que la clé maîtresse de déchiffrement K1a permet uniquement de réaliser le déchiffrement.

Au cours d'une étape B12, le module de personnalisation M26 cause ensuite la personnalisation du document de sécurité C à partir des données de personnalisation DP récupérées à l'étape de déchiffrement B10. La personnalisation peut par exemple comprendre une modification physique en surface du document de sécurité C ou encore une configuration électrique du module électronique 30. La personnalisation B12 peut par exemple comprendre la formation (par impression, embossage, carbonisation laser, etc.) en surface du document de sécurité C de motifs 32a (caractères, symboles, numéro de série, photos etc.). La personnalisation B12 peut également comprendre l'enregistrement dans une mémoire du module électronique 30 de données de personnalisation DP (ou tout autre configuration électrique appropriée).

On notera que le module de personnalisation M26 peut inclure les systèmes d'impression, d'embossage, de lecture de mémoire etc., nécessaires à la personnalisation souhaitée. Alternativement, le module de personnalisation M26 peut être configuré pour envoyer au moins une commande nécessaire pour déclencher l'opération de personnalisation appropriée.

L'invention permet avantageusement de sécuriser le processus de personnalisation d'un document de sécurité. Pour ce faire, un lien intrinsèque est créé entre les données de personnalisation et le document de sécurité. Ceci est possible car la donnée de diversification (permettant de chiffrer et déchiffrer les données de personnalisation) est associée au document de sécurité. Un tel lien est notamment possible lorsque la donnée de diversification est présente dans ou sur le document de sécurité, sous une quelconque forme appropriée (donnée numérique enregistrée dans une mémoire, motif physique présent sur le document, PUF, etc.). Ainsi, seule l'analyse du document de sécurité permet de récupérer la donnée de diversification lors de la personnalisation. Autrement dit, le fabricant EB supervisant la personnalisation ne peut obtenir la donnée de diversification DV qu'à partir du document de sécurité lui-même. Typiquement, l'entité EB sera seulement en mesure de récupérer la donnée de diversification DV (et donc les données de personnalisation correspondantes) lorsqu'il procédera à la personnalisation du document de sécurité concerné.

Par ailleurs, même lorsqu'il est en possession de la donnée de diversification DV, l'entité EB est limitée dans l'usage qu'il peut en faire pour récupérer des données de personnalisation. Ainsi, grâce à l'invention, l'entité EB en charge de personnaliser un premier document de sécurité ne pourra utiliser la donnée de diversification DV présente sur ledit premier document que pour personnaliser celui-ci, et éventuellement les documents de sécurité appartenant au même lot que ledit premier document de sécurité.

Dans un exemple particulier, une donnée de diversification DV est attribuée de façon unique à un document de sécurité C donné de sorte que l'obtention de la donnée de diversification DV depuis un document de sécurité ne permette pas d'obtenir des données de personnalisation destinées à d'autres documents de sécurité. Alternativement, une même donnée de diversification est attribuée collectivement à une pluralité (au moins un lot par exemple) de documents de sécurité. L'analyse d'un document de sécurité permet alors de récupérer une donnée de diversification valide pour la personnalisation d'un ensemble de documents de sécurité.

Par ailleurs, l'invention a pour conséquence que l'entité EB en charge de réaliser la personnalisation n'a plus la possibilité de choisir parmi plusieurs sources d'approvisionnement pour obtenir le document de sécurité. Seul le document de sécurité connu de l'entité EA (et dont les données de diversification lui sont connus) met l'entité EB en capacité de déchiffrer des données chiffrées nécessaires pour personnaliser le document de sécurité en question.

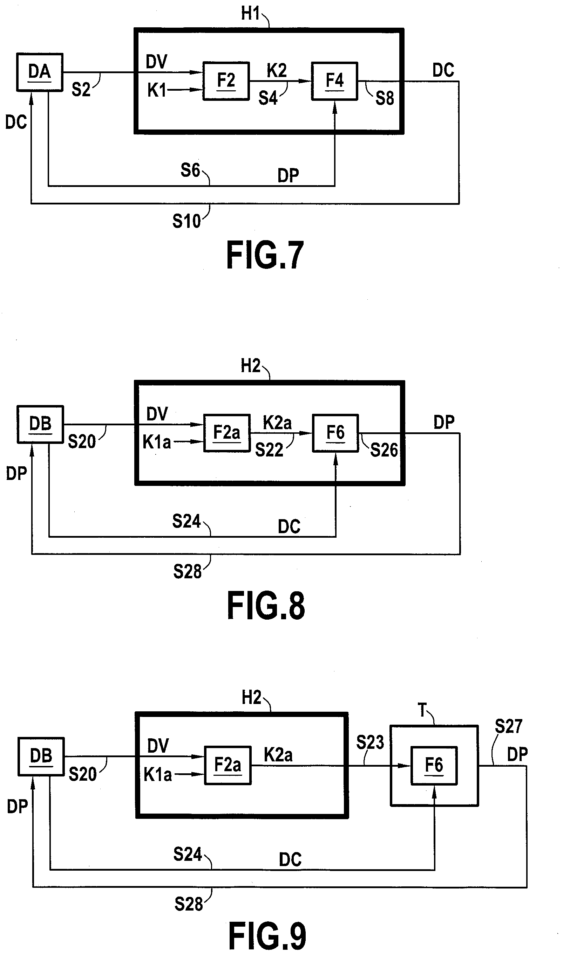

Selon un mode de réalisation décrit en référence aux **figures 7** et **8**, le dispositif de traitement DA peut utiliser un conteneur sécurisé H1 pour réaliser le chiffrage A4. De même, le dispositif de personnalisation DB peut utiliser un conteneur sécurisé H2 pour réaliser le déchiffrage B10.

Un conteneur sécurisé (ou coffre-fort numérique) est apte à enregistrer des clés cryptographiques et, le cas échéant, à réaliser des opérations de chiffrage ou de déchiffrage à l'aide de de telles clés. Un conteneur sécurisé peut être de type HSM (pour « *Hardware Security Module* ») ou encore se présenter sous la forme d'une carte à puce (ou « *batchcard* » en anglais).

Selon un exemple particulier, le conteneur sécurisé H1 est contenu en mémoire dans le dispositif de traitement DA. Selon un autre exemple de réalisation, le dispositif de traitement DA est apte à coopérer avec le conteneur sécurisé H1 situé cette fois hors du dispositif de traitement DA, de façon à réaliser le chiffrage A4.

De même, selon un exemple particulier, le çonteneur sécurisé H2 est contenu en mémoire dans le dispositif de personnalisation DB. Selon un autre exemple de réalisation, le dispositif de personnalisation DB est apte à coopérer avec le conteneur sécurisé H2 situé cette fois hors du dispositif de personnalisation DB, de façon à réaliser le déchiffrage B10.

Comme représenté en **figure 7**, le conteneur sécurisé H1 contient en mémoire la clé maîtresse de chiffrement K1 comme mentionnée précédemment. Au cours du chiffrement A4, le dispositif de traitement DA (plus particulièrement le module de chiffrement M4) envoie (S2) au conteneur sécurisé H1 la donnée de diversification DV. A partir de la donnée de diversification DV et de la clé maîtresse de chiffrement K1 contenue en mémoire, le conteneur sécurisé H1 détermine (S4) une clé dérivée K2 en réalisant une fonction cryptographique F2 prenant en entrée DV et K1. Le dispositif de traitement DA envoie (S6) en outre les données de personnalisation DP au conteneur sécurisé H1. A partir de la clé dérivée K2 et des données de personnalisation DP, le conteneur sécurisé H1 produit (S8) les données chiffrées DC en réalisant une fonction cryptographique F4 prenant en entrée K2 et DP. Une fois produites, ces données chiffrées DC sont délivrées (S10) par H1 au dispositif de traitement DA.

Selon une variante de réalisation, la clé maîtresse de chiffrement K1 n'est pas enregistrée dans le conteneur sécurisé H1 mais ce dernier est apte à recevoir cette clé maîtresse K1 depuis l'extérieur (depuis DA par exemple) afin de déterminer la clé dérivée K2 à partir de la clé maîtresse K2 en combinaison avec la donnée de diversification DV.

Comme représenté en **figure 8****,** le conteneur sécurisé H2 procède de façon analogue au conteneur sécurisé H1 pour réaliser le déchiffrage B10.

Plus spécifiquement, le conteneur sécurisé H2 contient en mémoire la clé maîtresse de déchiffrement K1a déjà mentionnée ci-avant. Au cours du déchiffrement B10, le dispositif de personnalisation DB (plus particulièrement le module de déchiffrement M24) envoie (S20) au conteneur sécurisé H2 la donnée de diversification DV récupérée lors de l'analyse B8. A partir de la donnée de diversification DV et de la clé maîtresse de déchiffrement K1a contenue en mémoire, le conteneur sécurisé H2 détermine (S22) la clé dérivée K2a déjà mentionnée ci-avant en réalisant la fonction cryptographique F2a prenant en entrée DV et K1a.

Selon un premier exemple, les clés maîtresses K1 et K1a sont identiques (chiffrement asymétrique). Dans ce cas, les fonctions F2 et F2a exécutées respectivement par les conteneurs H1 et H2 sont identiques, et les clés dérivées K2 et K2a obtenues en exécutant respectivement les fonctions F2 et F2a sont identiques.

Selon un deuxième exemple, les clés maîtresses K1 et K1a sont des clés appariées distinctes l'une de l'autre (chiffrement asymétrique). Dans ce cas, les fonctions F2 et F2a exécutées respectivement par les conteneurs H1 et H2 sont différentes, et les clés dérivées K2 et K2a obtenues en exécutant respectivement les fonctions F2 et F2a sont différentes.

Selon une variante de réalisation, la clé maîtresse de déchiffrement K1a n'est pas enregistrée dans le conteneur sécurisé H2 mais ce dernier est apte à recevoir cette clé maîtresse K1a depuis l'extérieur (depuis DB par exemple) afin de déterminer la clé dérivée K2a à partir de la clé maîtresse K1a en combinaison avec la donnée de diversification DV.

Comme illustré en **figure 8**, le dispositif de personnalisation DB envoie (S24) en outre les données chiffrées DC au conteneur sécurisé H2. A partir de la clé dérivée K2a et des données chiffrées DC, le conteneur sécurisé H2 produit (S26) les données de personnalisation DP en réalisant une fonction cryptographique F6 prenant en entrée K2a et DC. Une fois produites, ces données de personnalisation DP sont délivrées (S28) par H2 au dispositif de personnalisation DB.

L'usage de conteneurs sécurisés permet de sécuriser les moyens cryptographiques (les clés maitresses K1 et K2 notamment) nécessaires pour chiffrer et déchiffrer les données de personnalisation. En effet, confier une clé maîtresse K1, K1a sans protection à une entité tierce peut présenter un risque dans la mesure où il est possible, à partir d'une telle clé maîtresse, de réaliser de l'ingénierie inverse afin de récupérer des informations sensibles. Grâce à l'usage de conteneurs sécurisés, une entité en charge de personnaliser un document de sécurité n'aura pas d'accès direct à la clé maîtresse elle-même (celle-ci étant contenue de façon sécurisée dans ledit conteneur). L'usage des conteneurs sécurisés permet de chiffrer ou déchiffrer de façon sécurisée les données de personnalisation.

Toutefois, dans certains cas, un risque subsiste lorsqu'une entité a en sa possession un conteneur sécurisé contenant un telle clé maîtresse. En effet, dans l'hypothèse où suffisamment de ressources sont déployées en ce sens, des données sensibles sont toujours susceptibles d'être obtenues à partir d'un tel conteneur sécurisé. L'entité EA (ou un tiers) peut par exemple ne pas avoir suffisant confiance dans l'entité EB pour lui laisser de façon prolongée un tel conteneur sécurisé.

Pour pallier ce problème, selon un mode de réalisation particulier, la présente invention propose, que le conteneur sécurisé permettant le déchiffrage des données chiffrées soit lui-même contenu dans une mémoire du document de sécurité que l'on souhaite personnaliser.

Plus précisément, selon un mode de réalisation particulier, le conteneur sécurisé H2, décrit ci-avant en référence à la **figure 8**, est inclus dans le document de sécurité C, plus précisément dans le module électronique 30 dans l'exemple envisagé ici. Le dispositif de personnalisation DP est apte à coopérer avec le module électronique 30 du document de sécurité C afin de permettre l'exécution des étapes S20 à S28 déjà décrites.

Dans ce mode de réalisation particulier, le dispositif de personnalisation DB, et plus généralement l'entité EB qui le supervise, n'ont accès au conteneur sécurisé H2 - et donc indirectement à la clé maîtresse K1 - que lorsque qu'ils détiennent le document de sécurité C à personnaliser. En l'absence du document de sécurité C, le conteneur sécurisé H2 est hors de portée de l'entité EB, diminuant ainsi les risques de sécurité mentionnés ci-avant.

Dans les exemples décrits en référence à la **figure 8**, le conteneur sécurisé H2 est apte à mettre en oeuvre la fonction cryptographique F6, le conteneur sécurisé H2 pouvant le cas échéant être mis en oeuvre dans le document de sécurité C. Selon une variante de réalisation illustrée en **figure 9**, le conteneur sécurisé H2, pouvant le cas échéant être mis en oeuvre dans le module électronique 30 du document de sécurité C, contient la clé maîtresse de déchiffrement K1a et est apte à exécuter la fonction cryptographique F2a afin d'obtenir la clé dérivée K2a. En revanche, la fonction cryptographique F6 est exécutée hors du document de sécurité C, et donc hors du conteneur sécurisé H2. Dans ce cas, le conteneur sécurisé H2 est par exemple configuré pour transmettre (S23) la clé dérivée K2a à un terminal T externe au document de sécurité C, et donc externe au conteneur sécurisé H2. Le terminal externe T peut, par exemple, être le dispositif de traitement DB. Le terminal externe T peut ainsi exécuter la fonction F6 à partir de la clé dérivée K2a et des données chiffrées DC, afin d'obtenir (S27) les données de personnalisation DP. Le cas échéant, le terminal externe T peut transmettre (S29) les données de personnalisation DP au dispositif de traitement DB. Ce mode de réalisation est avantageux lorsque le document de sécurité C à personnaliser ne dispose pas des ressources nécessaires pour réaliser l'opération de déchiffrement.

Dans un exemple particulier, lorsque le conteneur sécurisé H2 contenant la clé maîtresse de chiffrement K1a est mis en oeuvre dans le document C, le dispositif de personnalisation DB, et plus généralement l'entité EB qui le supervise, n'ont accès à la clé dérivée K2a, et donc indirectement à la clé maîtresse de déchiffrement Kla, que lorsque qu'ils détiennent le document de sécurité C à personnaliser. En l'absence du document de sécurité C, la clé maîtresse de déchiffrement K1a et la clé dérivée K2a sont hors de portée de l'entité EB, diminuant ainsi les risques de sécurité mentionnés ci-avant.

Selon une variante du mode de réalisation décrit ci-dessus en référence à la **figure 9**, la clé maîtresse de déchiffrement K1a n'est pas enregistrée dans le conteneur sécurisé H2 mais ce dernier être apte à recevoir cette clé maîtresse K1a (depuis DB par exemple) afin de déterminer la clé dérivée K2a à partir de la clé maîtresse K1a et de la donnée de diversification DV.

Selon un mode de réalisation particulier, le conteneur H1 (respectivement H2) ne réalise pas la fonction F2 (respectivement F2a), ni ne contient K1 (respectivement K1a). Il contient uniquement la clef K2 (respectivement K2a).

Selon un mode de réalisation particulier, les conteneurs H1 et H2 ne réalisent pas respectivement les fonctions F2 et F2a, ni ne contiennent respectivement K1 et K1a. Ils contiennent uniquement respectivement les clefs K2 et K2a.

Les conteneurs sécurisés H1 et H2 sont par exemple chacun aptes à recevoir respectivement la clé de dérivation K2 et K2a depuis l'extérieur afin de réaliser respectivement les fonctions F4 et F6.

Comme décrit ci-avant, l'invention permet de réaliser une personnalisation de façon sécurisée d'un document de sécurité. On notera toutefois que d'autres applications de l'invention peuvent être envisagées. Il est en effet envisageable d'utiliser l'invention dans un but autre que la personnalisation d'un document de sécurité.

Plus généralement, l'invention vise à transmettre de façon sécurisée des données associées à un document de sécurité depuis une première entité vers une deuxième entité.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant afin de répondre à un besoin bien particulier.

Selon un mode de réalisation, l'invention est mise en oeuvre au moyen de composants logiciels et/ou matériels. Dans cette optique, le terme « module » employé dans le présent exposé peut correspondre aussi bien à un composant logiciel, qu'à un composant matériel ou à un ensemble de composants matériels et logiciels.

## Revendications

1. Procédé de personnalisation, mis en oeuvre par un système (SY) comprenant un dispositif de traitement (DA) et un dispositif de personnalisation (DB), pour personnaliser un document de sécurité (C), ledit procédé comprenant les étapes suivantes réalisées par le dispositif de traitement (DA) :
- obtention (A2) de données de personnalisation (DP) pour personnaliser le document de sécurité ;
- chiffrement (A4) des données de personnalisation, à partir d'une donnée de diversification (DV) associée au document de sécurité, de sorte à produire des données chiffrées (DC), dans lequel, lors du chiffrement, les données de personnalisation (DP) sont chiffrées à partir d'une clé maîtresse de chiffrement (K1) en combinaison avec la donnée de diversification ; et
- transmission (A6) des données chiffrées à un dispositif de personnalisation (DB) pour permettre à ce dernier de personnaliser le document de sécurité à partir des données chiffrées et de la donnée de diversification ;
ledit procédé comprenant en outre les étapes suivantes réalisées par le dispositif de personnalisation (DB) :
- réception (B6) des données chiffrées (DC) ;
- analyse (B8) du document de sécurité de sorte à récupérer la donnée de diversification (DV) associée audit document de sécurité ;
- déchiffrement (B10) des données chiffrées à partir d'une clé maîtresse de déchiffrement (K1a) en combinaison avec la donnée de diversification pour obtenir des données de personnalisation (DP) ; et
- personnalisation (B12) du document de sécurité à partir des données de personnalisation, comprenant une modification physique en surface du document de sécurité (C).

2. Procédé selon la revendication 1, dans lequel la donnée de diversification (DV) est présente dans ou sur le document de sécurité (C).

3. Procédé selon la revendication 1 ou 2, dans lequel, la clé maîtresse de chiffrement (K1) est appariée à la clé maîtresse de déchiffrement (K1a) distincte de la clé maîtresse de chiffrement (K1).

4. Procédé selon l'une quelconque des revendications 1 à 3, dans lequel le dispositif de traitement utilise un conteneur sécurisé (H1) pour réaliser ledit chiffrement, la clé maîtresse de chiffrement (K1) étant enregistrée dans le conteneur sécurisé,
dans lequel ledit conteneur sécurisé :
- détermine une clé dérivée (K2) à partir de la donnée de diversification et de la clé maîtresse de chiffrement (K1), et
- chiffre, à partir de la clé dérivée (K2), les données de personnalisation (DP) pour produire les données chiffrées (DC).

5. Procédé selon l'une quelconque des revendications 1 à 4, dans lequel le document de sécurité comprend une mémoire (42) dans laquelle est enregistrée au moins une partie (DV2) de la donnée de diversification, l'analyse comprenant la lecture de la mémoire pour récupérer ladite au moins une partie de la donnée de diversification.

6. Procédé selon l'une quelconque des revendications 1 à 5, dans lequel le dispositif de personnalisation (DB) coopère avec un conteneur sécurisé (H2) pour causer ledit déchiffrement,
dans lequel ledit conteneur sécurisé déchiffre (S26) les données chiffrées (DC) reçues par le dispositif de personnalisation de sorte à obtenir lesdites données de personnalisation (DP).

7. Procédé selon la revendication 6, dans lequel le conteneur sécurisé (H2) :
- détermine (S22) une clé dérivée (K2a) à partir de la clé maîtresse de déchiffrement (K1a) et à partir de la donnée de diversification (DV) récupérée par le dispositif de personnalisation (DB) lors de ladite analyse ; et
- déchiffre (S26), à partir de la clé dérivée (K2a), les données chiffrées (DC) reçues par le dispositif de personnalisation de sorte à obtenir lesdites données de personnalisation (DP).

8. Procédé selon la revendication 6, le dispositif de personnalisation (DB) coopérant avec le conteneur sécurisé (H2) pour causer ledit déchiffrement,
dans lequel ledit conteneur sécurisé :
- détermine (S22) une clé dérivée (K2a) à partir de la clé maîtresse de déchiffrement (K1a) et à partir de la donnée de diversification (DV) récupérée par le dispositif de personnalisation (DB) lors de ladite analyse ; et
- transmet la clé dérivée (K2a) à un terminal externe pour que ce dernier déchiffre (S27) les données chiffrées (DC) de sorte à obtenir lesdites données de personnalisation (DP).

9. Procédé selon l'une quelconque des revendications 6 à 8, dans lequel le document de sécurité (C) comprend un module électronique (30) apte à mettre en oeuvre le conteneur sécurisé (H2).

10. Procédé selon l'une quelconque des revendications 6 ou 9, la clé maîtresse de déchiffrement (K1a) étant enregistrée dans le conteneur sécurisé (H2).

11. Procédé selon l'une quelconque des revendications 1 à 10, dans lequel au moins une partie de la donnée de diversification récupérée lors de ladite analyse comprend un motif (DV1) formé à la surface du document de sécurité.

12. Programme d'ordinateur (PG1 ; PG2) comportant des instructions pour l'exécution des étapes d'un procédé selon l'une quelconque des revendications 1 à 11 lorsque ledit programme est exécuté par un ordinateur.

13. Système (SY) comprenant un dispositif de traitement (DA) et un dispositif de personnalisation (DB), pour personnaliser un document de sécurité (C), le dispositif de traitement (DA) comprenant :
- un module d'obtention (M2) configuré pour obtenir des données de personnalisation pour personnaliser le document de sécurité ;
- un module de chiffrement (M4) configuré pour chiffrer les données de personnalisation à partir d'une donnée de diversification (DV) associée au document de sécurité ou à un individu, de sorte à produire des données chiffrées, dans lequel le module de chiffrement est configuré pour chiffrer les données de personnalisation (DP) à partir d'une clé maîtresse de chiffrement (K1) en combinaison avec la donnée de diversification ;
et
- un module de transmission (M6) configuré pour transmettre les données chiffrées à un dispositif de personnalisation pour permettre à ce dernier de personnaliser le document de sécurité à partir des données chiffrées et de la donnée de diversification ;
le dispositif de personnalisation (DB) comprenant :
- un module de réception (M20) configuré pour recevoir les données chiffrées ;
- un module d'analyse (M22) configuré pour analyser le document de sécurité de sorte à récupérer la donnée de diversification associée audit document de sécurité ;
- un module de déchiffrement (M24) configuré pour déchiffrer les données chiffrées à partir d'une clé maîtresse de déchiffrement (K1a) en combinaison avec la donnée de diversification pour obtenir des données de personnalisation (DP) ; et
- un module de personnalisation (M26) configuré pour personnaliser le document de sécurité à partir des données de personnalisation, en réalisant une modification physique en surface du document de sécurité (C).

14. Système selon la revendication 13, dans lequel au moins une partie de la donnée de diversification récupérée par le module d'analyse comprend un motif (DV1) formé à la surface du document de sécurité.

## Patentansprüche

1. Personalisierungsverfahren, das von einem System (SY) umgesetzt wird, umfassend eine Verarbeitungsvorrichtung (DA) und eine Personalisierungsvorrichtung (DB), um ein Sicherheitsdokument (C) zu personalisieren, wobei das Verfahren die folgenden Schritte aufweist, die von der Verarbeitungsvorrichtung (DA) ausgeführt werden:
- Erhalten (A2) von Personalisierungsdaten (DP), um das Sicherheitsdokument zu personalisieren,
- Verschlüsseln (A4) der Personalisierungsdaten ausgehend von einem Diversifizierungsdatum (DV), das dem Sicherheitsdokument zugeordnet wird, derart, um verschlüsselte Daten (DC) zu erzeugen, wobei die Personalisierungsdaten (DP) während des Verschlüsselns ausgehend von einem Hauptverschlüsselungsschlüssel (K1) in Kombination mit dem Diversifizierungsdatum verschlüsselt werden, und
- Übertragen (A6) der verschlüsselten Daten an eine Personalisierungsvorrichtung (DB), um dieser Letzteren zu ermöglichen, das Sicherheitsdokument ausgehend von den verschlüsselten Daten und dem Diversifizierungsdatum zu personalisieren,
wobei das Verfahren ferner die folgenden Schritte aufweist, die von der Personalisierungsvorrichtung (DB) durchgeführt werden:
- Empfangen (B6) der verschlüsselten Daten (DC),
- Analysieren (B8) des Sicherheitsdokuments derart, um das Diversifizierungsdatum (DV) abzurufen, das dem Sicherheitsdokument zugeordnet wird,
- Entschlüsseln (B10) der verschlüsselten Daten ausgehend von einem Hauptentschlüsselungsschlüssel (K1a) in Kombination mit dem Diversifizierungsdatum, um Personalisierungsdaten (DP) zu erhalten, und
- Personalisieren (B12) des Sicherheitsdokuments ausgehend von den Personalisierungsdaten, umfassend ein physikalisches Verändern auf der Oberfläche des Sicherheitsdokuments (C).

2. Verfahren nach Anspruch 1, wobei das Diversifizierungsdatum (DV) in oder auf dem Sicherheitsdokument (C) vorhanden ist.

3. Verfahren nach Anspruch 1 oder 2, wobei der Hauptverschlüsselungsschlüssel (K1) mit dem Hauptentschlüsselungsschlüssel (K1a) gepaart wird, der von dem Hauptverschlüsselungsschlüssel (K1) verschieden ist.

4. Verfahren nach einem der Ansprüche 1 bis 3, wobei die Verarbeitungsvorrichtung einen gesicherten Behälter (H1) verwendet, um das Verschlüsseln durchzuführen, wobei der Hauptverschlüsselungsschlüssel (K1) in dem gesicherten Behälter gespeichert wird,
wobei der gesicherte Behälter:
- einen abgeleiteten Schlüssel (K2) ausgehend von dem Diversifizierungsdatum und dem Hauptverschlüsselungsschlüssel (K1) bestimmt und
- die Personalisierungsdaten (DP) ausgehend von dem abgeleiteten Schlüssel (K2) verschlüsselt, um die verschlüsselten Daten (DC) zu erstellen.

5. Verfahren nach einem der Ansprüche 1 bis 4, wobei das Sicherheitsdokument einen Speicher (42) aufweist, in dem mindestens ein Teil (DV2) des Diversifizierungsdatums aufgezeichnet wird, wobei das Analysieren das Lesen des Speichers aufweist, um den mindestens einen Teil des Diversifizierungsdatums abzurufen.

6. Verfahren nach einem der Ansprüche 1 bis 5, wobei die Personalisierungsvorrichtung (DB) mit einem gesicherten Behälter (H2) zusammenwirkt, um das Entschlüsseln auszulösen,
wobei der gesicherte Behälter die verschlüsselten Daten (DC), die von der Personalisierungsvorrichtung empfangen werden, derart entschlüsselt (S26), um die Personalisierungsdaten (DP) zu erhalten.

7. Verfahren nach dem Anspruch 6, wobei der gesicherte Behälter (H2):
- einen abgeleiteten Schlüssel (K2a) ausgehend von dem Hauptentschlüsselungsschlüssel (K1a) und ausgehend von dem Diversifizierungsdatum (DV) bestimmt (S22), das von der Personalisierungsvorrichtung (DB) während des Analysierens abgerufen wird, und
- ausgehend von dem abgeleiteten Schlüssel (K2a) die verschlüsselten Daten (DC), die von der Personalisierungsvorrichtung empfangen werden, derart entschlüsselt (S26), um die Personalisierungsdaten (DP) zu erhalten.

8. Verfahren nach Anspruch 6, wobei die Personalisierungsvorrichtung (DB) mit einem gesicherten Behälter (H2) zusammenwirkt, um das Entschlüsseln auszulösen,
wobei der gesicherte Behälter:
- einen abgeleiteten Schlüssel (K2a) ausgehend von dem Hauptentschlüsselungsschlüssel (K1a) und ausgehend von dem Diversifizierungsdatum (DV) bestimmt (S22), das von der Personalisierungsvorrichtung (DB) während des Analysierens abgerufen wird, und
- den abgeleiteten Schlüssel (K2a) an ein externes Endgerät überträgt damit dieses Letztere die verschlüsselten Daten (DC) derart entschlüsselt (S27), um die Personalisierungsdaten (DP) zu erhalten.

9. Verfahren nach einem der Ansprüche 6 bis 8, wobei das Sicherheitsdokument (C) ein elektronisches Modul (30) aufweist, das geeignet ist, den gesicherten Behälter (H2) umzusetzen.

10. Verfahren nach einem der Ansprüche 6 oder 9, wobei der Hauptverschlüsselungsschlüssel (K1a) in dem gesicherten Behälter (H2) gespeichert wird,

11. Verfahren nach einem der Ansprüche 1 bis 10, wobei der mindestens eine Teil des Diversifizierungsdatums, das während des Analysierens abgerufen wird, ein Muster (DV1) aufweist, das auf der Oberfläche des Sicherheitsdokuments gebildet wird.

12. Computerprogramm (PG1; PG2), das Anweisungen für das Ausführen der Schritte eines Verfahrens nach einem der Ansprüche 1 bis 11 aufweist, wenn das Programm von einem Computer ausgeführt wird.

13. System (SY), umfassend eine Verarbeitungsvorrichtung (DA) und eine Personalisierungsvorrichtung (DB), um ein Sicherheitsdokument (C) zu personalisieren, wobei die Verarbeitungsvorrichtung (DA) aufweist:
- ein Modul zum Erhalten (M2), das konfiguriert ist, um Personalisierungsdaten zu erhalten, um das Sicherheitsdokument zu personalisieren,
- ein Modul zum Verschlüsseln (M4), das konfiguriert ist, um die Personalisierungsdaten ausgehend von einem Diversifizierungsdatum (DV), das dem Sicherheitsdokument oder einer Person zugeordnet ist, derart zu verschlüsseln, um verschlüsselte Daten zu erzeugen, wobei das Modul zum Verschlüsseln konfiguriert ist, um die Personalisierungsdaten (DP) ausgehend von einem Hauptverschlüsselungsschlüssel (K1) in Kombination mit dem Diversifizierungsdatum zu verschlüsseln,
und
- ein Modul zum Übertragen (M6), das konfiguriert ist, um die verschlüsselten Daten an eine Personalisierungsvorrichtung zu übertragen, um dieser Letzteren zu ermöglichen, das Sicherheitsdokument ausgehend von den verschlüsselten Daten und dem Diversifizierungsdatum zu personalisieren,
wobei die Personalisierungsvorrichtung (DB) aufweist:
- ein Modul zum Empfangen (M20), das konfiguriert ist, um die verschlüsselten Daten zu empfangen,
- ein Modul zum Analysieren (M22), das konfiguriert ist, um das Sicherheitsdokument derart zu analysieren, um das Diversifizierungsdatum abzurufen, das dem Sicherheitsdokument zugeordnet ist,
- ein Modul zum Entschlüsseln (M24), das konfiguriert ist, um die verschlüsselten Daten ausgehend von einem Hauptentschlüsselungsschlüssel (K1a) in Kombination mit dem Diversifizierungsdatum zu entschlüsseln, um Personalisierungsdaten (DP) zu erhalten, und
- ein Modul zum Personalisieren (M26), das konfiguriert ist, um das Sicherheitsdokument ausgehend von den Personalisierungsdaten zu personalisieren, indem ein physikalisches Verändern auf der Oberfläche des Sicherheitsdokuments (C) durchgeführt wird.

14. System nach Anspruch 13, wobei mindestens ein Teil des Diversifizierungsdatums, von dem Modul zum Analysieren abgerufen ist, ein Muster (DV1) aufweist, das auf der Oberfläche des Sicherheitsdokuments gebildet ist.

## Claims

1. A customization method, implemented by a system (SY) comprising a processing device (DA) and a customization device (DB), to customize a security document (C), said method comprising the following steps carried out by the processing device (DA):
- obtaining (A2) customization data (DP) to customize the security document;
- encrypting (A4) customization data, from a diversification datum (DV) associated with the security document, so as to produce encrypted data (DC), wherein, during the encryption, the customization data (DP) are encrypted from a master encryption key (K1) in combination with the diversification datum; and
- sending (A6) encrypted data to a customization device (DB) to allow the latter to customize the security document from encrypted data and the diversification datum;
said method further comprising the following steps carried out by the customization device (DB):
- receiving (B6) encrypted data (DC);
- analyzing (B8) the security document so as to recover the diversification datum (DV) associated with said security document;
- decrypting (B10) encrypted data from a master decryption key (K1a) in combination with the diversification datum to obtain customization data (DP); and
- customizing (B12) the security document from customization data, comprising a physical modification on the surface of the security document (C).

2. The method according to claim 1, wherein the diversification datum (DV) is present in or on the security document (C).

3. The method according to claim 1 or 2, wherein the master encryption key (K1) is paired with the master decryption key (K1a) separate from the master encryption key (K1).

4. The method according to any one of claims 1 to 3, wherein the processing device uses a secure container (H1) to perform said encryption, the master encryption key (K1) being recorded in the secure container,
wherein said secure container:
- determines a derived key (K2) from the diversification datum and the master encryption key (K1), and
- encrypts, from the derived key (K2), the customization data (DP) to produce the encrypted data (DC).

5. The method according to any one of claims 1 to 4, wherein the security document comprises a memory (42) in which at least part (DV2) of the diversification datum is stored, the analysis comprising reading the memory to recover said at least part of the diversification datum.

6. The method according to any one of claims 1 to 5, wherein the customization device (DB) cooperates with a secure container (H2) to cause said decryption,
wherein said secure container decrypts (S26) the encrypted data (DC) received by the customization device so as to obtain said customization data (DP).

7. The method according to claim 6, wherein the secure container (H2):
- determines (S22) a derived key (K2a) from the master decryption key (K1a) and from the diversification datum (DV) recovered by the customization device (DB) during said analysis; and
- decrypts (S26), from the derived key (K2a), the encrypted data (DC) received by the customization device so as to obtain said customization data (DP).

8. The method according to claim 6, the customization device (DB) cooperating with the secure container (H2) to cause said decryption,
wherein said secure container:
- determines (S22) a derived key (K2a) from the master decryption key (K1a) and from the diversification datum (DV) recovered by the customization device (DB) during said analysis; and
- sends the derived key (K2a) to an external terminal so that the latter decrypts (S27) the encrypted data (DC) so as to obtain said customization data (DP).

9. The method according to any one of claims 6 to 8, wherein the security document (C) comprises an electronic module (30) able to implement the secure container (H2).

10. The method according to any one of claims 6 or 9, the master decryption key (K1a) being stored in the secure container (H2).

11. The method according to any one of claims 1 to 10, wherein at least part of the diversification datum recovered during said analysis comprises a pattern (DV1) formed on the surface of the security document.

12. A computer program (PG1; PG2) including instructions for executing steps of a method according to any one of claims 1 to 11 when said program is executed by a computer.

13. A system (SY) comprising a processing device (DA) and a customization device (DB), for customizing a security document (C), the processing device (DA) comprising:
- an obtaining module (M2) configured to obtain customization data to customize the security document;
- an encryption module (M4) configured to encrypt the customization data from a diversification datum (DV) associated with the security document or with an individual, so as to produce encrypted data, wherein the encryption module is configured to encrypt the customization data (DP) from a master encryption key (K1) in combination with the diversification datum; and
- a transmission module (M6) configured to send the encrypted data to a customization device to allow the latter to customize the security document from encrypted data and the diversification datum;
the customization device (DB) comprising:
- a receiving module (M20) configured to receive the encrypted data;
- an analysis module (M22) configured to analyze the security document so as to recover the diversification datum associated with said security document;
- a decryption module (M24) configured to decrypt the encrypted data from a master decryption key (K1a) in combination with the diversification datum to obtain customization data (DP); and
- a customization module (M26) configured to customize the security document from customization data, by performing a physical modification on the surface of the security document (C).

14. The system according to claim 13, wherein at least part of the diversification datum recovered by the analysis module comprises a pattern (DV1) formed on the surface of the security document.
